# EUROPÄISCHE PATENTSCHRIFT

(11) **EP 0 958 957 B1**
(45) Veröffentlichungstag und Bekanntmachung des Hinweises auf die Patenterteilung: **26.02.2003**
(21) Anmeldenummer: 99109112.5
(22) Anmeldetag: 07.05.1999
(51) Int. Cl.: B60N 2/00, F16B 21/06

(54) **Vorrichtung zur Halterung eines Fahrzeugsitzes**
Device for holding a vehicle seat
Dispositif de retenue d'un siège de véhicule

(30) Priorität: 16.05.1998 DE 29808871 U
(43) Veröffentlichungstag der Anmeldung: 24.11.1999
(73) Patentinhaber: Johnson Controls GmbH, 51399 Burscheid (DE)
(72) Erfinder: Shafry, Gavriel, 58540 Meinerzhagen (DE)
(74) Vertreter: Patentanwälte Dr. Solf & Zapf

(56) Entgegenhaltungen:
- EP-A- 0 487 890
- EP-A- 0 818 344
- WO-A-96/15025
- DE-A- 1 450 901
- DE-A- 1 500 833
- DE-A- 1 910 167
- DE-A- 19 601 367
- US-A- 4 489 979

## Beschreibung

Die vorliegende Erfindung betrifft eine Halterungsvorrichtung eines Fahrzeugsitzes zur lösbaren Haterung des Fahrzeugsitzes an einem Fahrzeugboden, mit mindestens zwei sitzseitigen Haltegliedern zum Zusammenwirken mit bodenseitigen, insbesondere ortfesten Halterungselementen, wobei die Halteglieder in einem Arretierzustand in eine formschlüssige Verbindung mit den Halterungselementen treten und wobei zwischen den Haltegliedern ein sich in Richtung auf den Fahrzeugboden hin verjüngendes Spreizteil angeordnet ist, durch dessen Relativbewegung zu den Haltegliedern die Halteglieder aus einem ungespreizten Lösezustand, in dem sie mit den Halterungselementen kuppelbar und von diesen trennbar sind, in einen gespreizten Arretierzustand überführbar sind.

Zur lösbaren Halterung von Fahrzeugsitzen in Kraftfahrzeugen sind verschiedenartigste Hakenverbindungen bekannt. Lediglich beispielsweise sei hier auf einige Veröffentlichungen hingewiesen: EP 0 397 333, EP 0 602 696, EP 0 609 130, EP 0 546 908 sowie EP 0 622 266.

Diese bekannten Halterungen haben zum Teil den Nachteil, daß der gesamte Sitz zum Lösen bzw. Einsetzen in einer bestimmten Weise bewegt, insbesondere verkippt werden muß. Dies ist vor allem bei schweren Sitzen (Sitzbänken) von Nachteil.

Aus der EP 0 780 260 ist eine Halterung der eingangs beschriebenen Art bekannt, bei der zwei schwenkbar an einem Sitzfuß befestigte jeweils mit einer Nut versehene Teile (ein Bolzenteil und ein Klauenteil) jeweils in einer Arretierstellung ein vorderes und ein hinteres, jeweils am Fahrzeugboden befestigtes Riegelteil hintergreifen können, wobei die Nuten, die Riegelteile sowie konkav geformte Abschnitte des Sitzfußes miteinander eine formschlüssige Verbindung bilden. Diese bekannte Vorrichtung hat zwar den Vorteil, daß die Fügerichtung zwischen Sitz und Fahrzeug im wesentlichen senkrecht zum Fahrzeugboden verläuft, wobei es sich um eine einfache Längsbewegung ohne jegliches Verkippen des Sitzes handelt. Allerdings hat die bekannte Vorrichtung den Nachteil, daß sie konstruktiv relativ aufwendig ist, und zwar wegen einer erforderlichen recht genauen Einhaltung von Montagetoleranzen für die Stiftverbindungen zur drehbeweglichen Befestigung der beweglichen Teile, eines erforderlichen Federelementes und der genau aufeinander abzustimmenden Konturierung von Bolzenteil, Klauenteil und Sitzfuß.

Der vorliegenden Erfindung liegt die Aufgabe zugrunde, eine Vorrichtung der gattungsgemäßen Art zu schaffen, die sich durch konstruktive Einfachheit sowie auch hohen Bedienungskomfort auszeichnet.

Erfindungsgemäß wird dies dadurch erreicht, daß die Halteglieder einen sich in Richtung auf den Fahrzeugboden hin verjüngenden Kopfabschnitt aufweisen, an dessen sitzseitigem Ende sich auf einander abgekehrten Aussenseiten der Halteglieder Nuten befinden, welche im Arretierzustand mit Anlageflächen, die dem Sitz zugewandt sind, die formschlüssige Verbindung mit den Halterungselementen bilden, und die Halteglieder auf einander zugekehrten Innenseiten in Richtung auf den Fahrzeugboden hin aufeinanderzulaufende, an die sich verjüngende Kontur des Spreizteiles angepaßte Schrägflächen als Anlage- und Gleitflächen für das Spreizteil aufweisen, derart, dass die Halteglieder unter einer Keilwirkung des Spreizteils eine lineare laterale, im wesentlichen parallele zum Fahrzeugboden gerichtete Translationsbewegung ausführen.

Die erfindungsgemäße Halterungsvorrichtung ist konstruktiv außerordentlich einfach ausgebildet. Das Spreizteil kann mit Vorteil zur Arretierung des Sitzes eine senkrechte Bewegung auf den Fahrzeugboden hin ausführen, wodurch die Fügerichtung der Sitzhalterung der Betätigungsrichtung des Spreizteiles entspricht. Dabei ist es von besonderem Vorteil, daß es sich bei dieser Bewegung nur um eine lineare, zum Fahrzeugboden im wesentlichen senkrechte Bewegung handelt. Die Halteglieder brauchen dabei ebenfalls nur lineare, zum Fahrzeugboden parallel gerichtete Bewegungen ausführen. Hierdurch werden komplizierte und komplexe Bewegungen, insbesondere Kippbewegungen, des gesamten Sitzes vermieden, was vor allem bei schweren Sitzen (Sitzbänken) von besonderem Vorteil ist.

Die erfindungsgemäße Halterungsvorrichtung dient zweckmäßigerweise nur zur Arretierung des Sitzes. Die Tragkraft- bzw. Lastabstützung kann vorzugsweise über separate Trägerteile (Sitzfüße) gewährleistet werden. Hierbei kann die erfindungsgemäße Halterungsvorrichtung aber mit Vorteil in einen Sitzfuß integriert werden. Zudem kann dabei auch mit Vorteil zur Bewegung des Spreizteiles eine Fernbetätigung über eine geeignete Betätigungseinrichtung, wie über einen Bowdenzug, ein Gestänge, eine hydraulische Einrichtung usw., vorgesehen sein.

Die ortsfesten Halterungselemente können mit Vorteil durch Kanten einer, gegebenenfalls randverstärkten Öffnung im Fahrzeugboden gebildet sein, die im Arretierzustand von den Haltegliedern hintergriffen werden.

Weitere vorteilhafte Ausgestaltungsmerkmale der Erfindung sind in den Unteransprüchen sowie der folgenden Beschreibung enthalten.

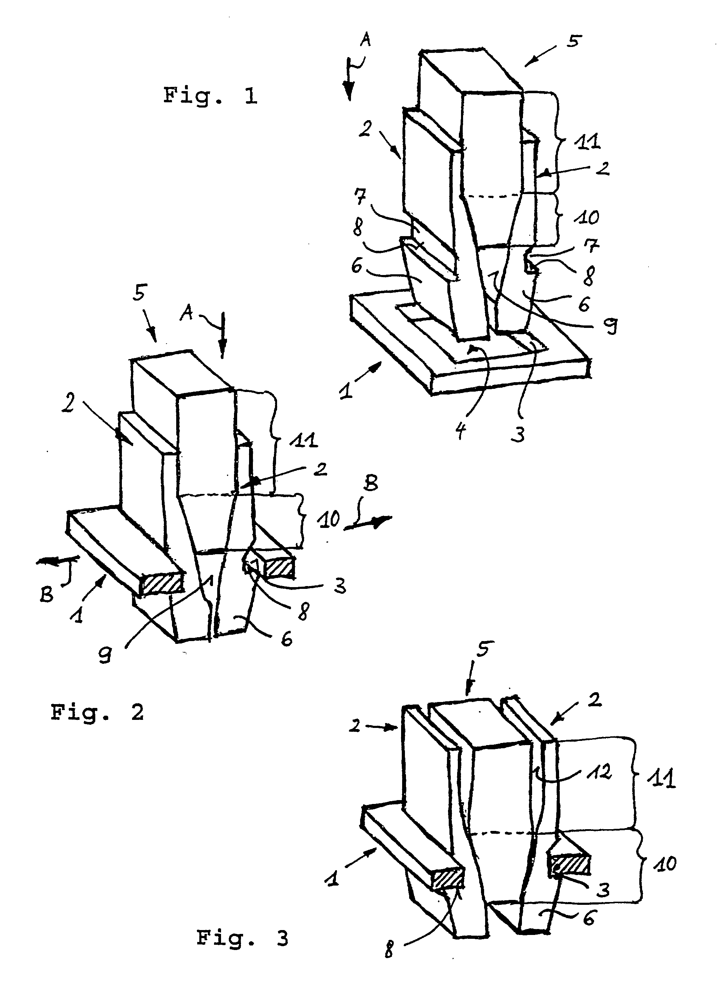

Anhand eines bevorzugten, in der Zeichnung veranschaulichten Ausführungsbeispiels soll im folgenden die Erfindung näher erläutert werden. Dabei zeigen die Fig. 1 bis 3 in schematisierter perspektivischer Ansicht eine Ausführungsform einer erfindungsgemäßen Halterungsvorrichtung, und zwar im Lösezustand, in einem Zwischenzustand und im Arretierzustand.

In den verschiedenen Figuren der Zeichnung sind gleiche Teile stets mit denselben Bezugszeichen versehen, so daß sie in der Regel auch jeweils nur einmal beschrieben werden.

Eine erfindungsgemäße Vorrichtung zur lösbaren Halterung eines Fahrzeugsitzes an einem Fahrzeugboden 1 (Der Sitz ist nicht dargestellt; der Fahrzeugboden 1 ist in der Zeichnung durch ein Rahmenteil angedeutet) besteht aus mindestens zwei sitzseitigen Haltegliedern 2, die zum Zusammenwirken mit bodenseitigen, insbesondere ortsfesten Halterungselementen 3 bestimmt sind. Die ortsfesten Halterungselemente 3 sind durch mindestens zwei Kanten einer Öffnung 4 im Fahrzeugboden 1 gebildet, die im Arretierzustand von den Haltegliedern 2 hintergriffen werden. Auf diese Weise treten die Halteglieder 2 im Arretierzustand in eine formschlüssige Verbindung mit den Halterungselementen 3.

Zwischen den Haltegliedern 2 befindet sich ein sich in Richtung (Pfeil A) auf den Fahrzeugboden 1 hin verjüngendes Spreizteil 5, durch dessen Bewegung in Richtung A auf den Fahrzeugboden 1 hin die Halteglieder 2 aus einem ungespreizten Lösezustand (Fig. 1), in dem sie mit den Halteelementen 3 kuppelbar oder von diesen trennbar sind, über Zwischenzustände - wie in Fig. 2 dargestellt - in einen gespreizten Arretierzustand (Fig. 3) überführbar sind. Da das Spreizteil 5 eine Keilwirkung auf die Halteglieder 2 ausübt, führen diese dabei eine laterale, vorteilhafterweise lineare, im wesentlichen parallel zum Fahrzeugboden 1 gerichtete (Translations-)Bewegung aus.

Die Halteglieder 2 weisen einen sich in Richtung A auf den Fahrzeugboden 1 hin verjüngenden Kopfabschnitt 6 auf, an dessen sitzseitigem Ende sich auf einander abgekehrten Außenseiten der Halteglieder 2 Nuten 7 befinden, welche im Arretierzustand mit Anlageflächen 8, die dem Sitz zugewandt sind, die formschlüssige Verbindung mit den Halterungselementen 3 bilden. Durch den sich verjüngenden Kopfabschnitt 6 ist das Einführen der Halteglieder 2 in die Bodenöffnung 4 erleichtert, wobei beim Einführen vorteilhafterweise eine Selbstzentrierung stattfindet. Hieran wird besonders deutlich, daß die einzuhaltenden Fertigungstoleranzen der verschiedenen Teile der erfindungsgemäßen Vorrichtung groß im Verhältnis zu denen der bekannten Vorrichtungen gewählt werden können, ohne daß damit verbunden eine Funktionsbeeinträchtigung zu fürchten wäre.

Auf ihren einander zugekehrten Innenseiten weisen die Halteglieder 2 in Richtung A auf den Fahrzeugboden 1 hin aufeinanderzulaufende, an die sich verjüngende Kontur des Spreizteiles 5 angepaßte Schrägflächen 9 auf, die als Anlage- und Gleitflächen für das Spreizteil 5 dienen.

Das Spreizteil 5 weist an seiner Spitze einen Spreizabschnitt 10 auf, der in der dargestellten Ausführung als ein gerades liegendes Prisma ausgebildet ist, wobei das Prisma jeweils eine Grund- und Deckfläche in Form eines gleichschenkligen Trapezes besitzt, das eine dem Fahrzeugboden 1 zugewandte kürzere Grundlinie aufweist. Der Spreizabschnitt 10 könnte auch pyramidenstumpfförmig ausgebildet sein; auf die dargestellte Weise verteilen sich jedoch vorteilhafterweise die durch das Spreizteil 5 auf die Halteglieder 2 ausgeübten Spreizkräfte auf eine größere Wirkfläche, so daß verhältnismäßig geringere Flächenpressungen entstehen.

Zur Verminderung der Reibung zwischen dem Spreizteil 5 und den Haltegliedern 2 ist es auch möglich, die Schrägflächen 9 der Halteglieder 2 und/oder die diesen Schrägflächen 9 zugewandten Flächen im Spreizabschnitt 10 des Spreizteiles 5 mit einer Verrippung zu versehen, wodurch sich in diesem Fall jedoch größere Flächenpressungen ergeben würden.

An den Spreizabschnitt 10 schließt sich ein Führungsabschnitt 11 an, der in seiner Grundgestalt prismatisch, insbesondere als Quader, ausgebildet ist. In der Zeichnung deutet eine Strichlinie die Lage der Trennfläche zwischen dem Spreizabschnitt 10 und dem Führungsabschnitt 11 an. Der Führungsabschnitt 11 des Spreizteiles 5 ist während des Verankerungsvorganges des Sitzes im Fahrzeugboden 1 (Fig. 2) zwischen Führungsflächen 12 gehalten, die sich in Richtung auf den Fahrzeugsitz hin auf den einander zugekehrten Innenseiten der Halteglieder 2 an die vorstehend beschriebenen Schrägflächen 9 der Halteglieder 2 anschließen. Die Führungsflächen 12 selbst sind nur in Fig. 3 unverdeckt zu sehen, wo sie im Arretierzustand beabstandet zum Spreizteil 5 angeordnet sind.

Wie für die Schrägflächen 9 der Halteglieder 2 und die diesen Schrägflächen 9 zugewandten Flächen des Kopfabschnittes 6 des Spreizteiles 5 kann auch für die Führungsflächen 12 eine Verrippung vorgesehen sein.

Zur Verankerung des Sitzes am Boden werden zunächst, wie Fig. 1 zeigt, die Halteglieder 2 gemeinsam mit dem Spreizteil 5, und ohne Relativbewegung dazu in die Bodenöffnung 4 eingesetzt.

Danach wird auf das Spreizteil 5 ein Druck in Richtung A auf den Fahrzeugboden 1 hin ausgeübt, so daß es sich in dieser Richtung relativ zu den Haltegliedern 2 bewegt, die Halteglieder 2 auseinander bewegt (Fig. 2) und so aus ihrem ungespreizten Lösezustand in den gespreizten Arretierzustand überführt (Fig. 3). Dabei ist es zweckmäßig, daß einerseits die Halteglieder 2 derart mit dem Sitz verbunden sind, daß eine laterale, jedoch keine senkrechte Relativbewegung zum Sitz möglich ist, und andererseits das Spreizteil 5 derart mit dem Sitz verbunden ist, daß eine senkrechte, jedoch keine laterale Relativbewegung zum Sitz möglich ist.

Zum Lösen der Halterungsvorrichtung braucht lediglich das Spreizteil 5 entgegen dem Richtungspfeil A vom Fahrzeugboden 1 weg bewegt (gezogen) zu werden, wodurch ein Lösen der formschlüssigen Verbindung zwischen den Haltegliedern 2 und den Halterungselementen 3 möglich wird. Der Lösevorgang kann beispielsweise durch eine die Halteglieder 2 umgreifende und gegeneinander drängende Federklammer unterstützt werden.

Die Erfindung ist nicht auf das dargestellte Ausführungsbeispiel beschränkt: So wäre es gemäß einer gleichwirkenden Ausführung der Erfindung auch möglich, daß die Halteglieder 2 einen im wesentlichen ringsegmentförmigen Grundriß aufweisen, wobei das Spreizteil 5 einen im wesentlichen kreisförmigen Grundriß besitzt. Die Halteglieder 2 können in diesem Fall das dornartig und konisch ausgebildete Spreizteil 5 schalenförmig umgreifen. Der Spreizabschnitt 10 wäre in diesem Fall in seiner Grundgestalt kegelstumpfartig und der sich daran anschließende Führungsabschnitt 11 in seiner Grundgestalt als Zylinder ausgebildet. Es können sowohl bei dem dargestellten Ausführungsbeispiel als auch bei dieser letzteren Ausführung mehr als zwei, insbesondere drei oder vier, Halteglieder 2 und entsprechende Halterungselemente 3 vorgesehen sein. Der Begriff "Boden" (und folglich auch die damit verbundenen Richtungsangaben) ist in den voranstehenden Ausführungen im weiteren Sinn, zwar von "Befestigungsfläche" oder "Befestigungstafel", zu verstehen, wobei es sich dabei unter Umständen auch um eine Wandfläche handeln könnte.

### Bezugszeichen

- 1: Fahrzeugboden
- 2: Halteglieder
- 3: Halterungselemente
- 4: Öffnung in 1
- 5: Spreizteil
- 6: Kopfabschnitt von 2
- 7: Nuten an 2
- 8: Anlageflächen von 7
- 9: innere Schrägflächen von 2
- 10: Spreizabschnitt von 5
- 11: Führungsabschnitt von 5
- 12: Führungsflächen von 2

- A: (senkrechte) Richtung Sitz-Boden
- B: Arretierungsrichtung von 2, (waagrechte) Richtung parallel zum Boden

## Patentansprüche

1. Halterungsvorrichtung eines Fahrzeugssitzes zur lösbaren Halterung des Fahrzeugsitzes an einem Fahrzeugboden (1), mit mindestens zwei sitzseitigen Haltegliedern (2) zum Zusammenwirken mit bodenseitigen, insbesondere ortsfesten Halterungselementen (3), wobei die Halteglieder (2) in einem Arretierzustand in eine formschlüssige Verbindung mit den Halterungselementen (3) treten und wobei zwischen den Haltegliedem (2) ein sich in Richtung (A) auf den Fahrzeugboden (1) hin verjüngendes Spreizteil (5) angeordnet ist, durch dessen Relativbewegung zu den Haltegliedern (2) die Halteglieder (2) aus einem ungespreizten Lösezustand, in dem sie mit den Halterungselementen (3) kuppelbar und von diesen trennbar sind, in einen gespreizten Arretierzustand überführbar sind,
**dadurch gekennzeichnet, daß** die Halteglieder (2) einen sich in Richtung (A) auf den Fahrzeugboden (1) hin verjüngenden Kopfabschnitt (6) aufweisen, an dessen sitzseitigem Ende sich auf einander abgekehrten Außenseiten der Halteglieder (2) Nuten (7) befinden, welche im Arretierzustand mit Anlageflächen (8), die dem Sitz zugewandt sind, die formschlüssige Verbindung mit den Halterungselementen (3) bilden, und die Halteglieder (2) auf einander zugekehrten Innenseiten in Richtung (A) auf den Fahrzeugboden (1) hin aufeinanderzulaufende, an die sich verjüngende Kontur des Spreizteiles (5) angepaßte Schrägflächen (9) als Anlage- und Gleitflächen für das Spreizteil (5) aufweisen, derart, daß die Halteglieder (2) unter einer Keilwirkung des Spreizteils (5) eine lineare laterale, im wesentlichen parallel zum Fahrzeugboden (1) gerichtete Translationsbewegung ausführen.

2. Vorrichtung nach Anspruch 1,
**dadurch gekennzeichnet, daß** die ortsfesten Halterungselemente (3) durch Kanten einer Öffnung (4) im Fahrzeugboden (1) gebildet sind, die im Arretierzustand von den Haltegliedern (2) hintergriffen werden.

3. Vorrichtung nach einem der Ansprüche 1 oder 2,
**dadurch gekennzeichnet, daß** das Spreizteil (5) an seiner Spitze einen Spreizabschnitt (10) aufweisen, der in seiner Grundgestalt kegelstumpfartig, pyramidenstumpfartig oder als gerades, liegendes Prisma mit jeweils einer Grund- und Deckfläche in Form eines gleichschenkligen Trapezes, das eine dem Fahrzeugboden (1) zugewandte kürzere Grundlinie aufweist, ausgebildet ist.

4. Vorrichtung nach einem der Ansprüche 1 bis 3,
**dadurch gekennzeichnet, daß** das Spreizteil (5) einen sich insbesondere an den Spreizabschnitt (10) anschließenden Führungsabschnitt (11) aufweist, der in seiner Grundgestalt als Zylinder oder als Prisma, insbesondere als Quader, ausgebildet ist.

5. Vorrichtung nach einem der Ansprüche 1 bis 4,
**dadurch gekennzeichnet, daß** die Halteglieder (2) derart mit dem Sitz verbunden sind, daß eine laterale, jedoch keine senkrechte Relativbewegung zum Sitz möglich ist.

6. Vorrichtung nach einem der Ansprüche 1 bis 5,
**dadurch gekennzeichnet, daß** das Spreizteil (5) derart mit dem Sitz verbunden ist, daß eine senkrechte, jedoch keine laterale Relativbewegung zum Sitz möglich ist.

7. Vorrichtung nach einem der Ansprüche 1 bis 6,
**dadurch gekennzeichnet, daß** zur Bewegung des Spreizteiles (5) in Richtung (A) auf den Fahrzeugboden (1) hin und zurück eine Betätigungseinrichtung vorgesehen ist.

8. Vorrichtung nach einem der Ansprüche 1 bis 7,
**gekennzeichnet durch** einen im wesentlichen ringsegmentförmigen Grundriß der Halteglieder (2) und einen im wesentlichen kreisförmigen Grundriß des Spreizteiles (5), wobei die Halteglieder (2) das domartig ausgebildete Spreizteil (5) schalenförmig umgreifen.

9. Vorrichtung nach einem der Ansprüche 1 bis 8,
**gekennzeichnet durch** drei oder vier Halteglieder (2) und drei oder vier Halterungselemente (3).

## Claims

1. Securing device of a vehicle seat for the releasable securing of the vehicle seat to a vehicle floor (1), having at least two seat-side retaining members (2) for interaction with floor-side, in particular positionally fixed securing elements (3), the retaining members (2), in a locking state, entering into a form-fitting connection with the securing elements (3), and an expanding part (5) being arranged between the retaining members (2), which part tapers towards the vehicle floor (1) in the direction (A), and by means of its relative movement to the retaining members (2), the retaining members (2) can be transferred from an unexpanded release state, in which they can be coupled to the securing elements (3) and can be separated therefrom, into an expanded locking state, **characterized in that** the retaining members (2) have a head section (6) which tapers towards the vehicle floor (1) in the direction (A), and, at its seat-side end, grooves (7) are situated on mutually remote outer sides of the retaining members (2), which grooves, in the locking state, together with bearing surfaces (A) , which face the seat, form the form-fitting connection to the securing elements (3), and the retaining members (2) have, on mutually facing inner sides, sloping surfaces (9), which converge together towards the vehicle floor (1) in the direction (A) and are matched to the tapering contour of the expanding part (5), as bearing and sliding surfaces for the expanding part (5), in such a manner that the retaining members (2) under a wedging action of the expanding part (5) execute a linear, lateral translational movement directed essentially parallel to the vehicle floor (1).

2. Device according to Claim 1, **characterized in that** the positionally fixed securing elements (3) are formed by edges of an opening (4) in the vehicle floor (1), which edges are gripped behind by the retaining members (2) in the locking state.

3. Device according to either of Claims 1 and 2, **characterized in that** the expanding part (5) has at its tip an expanding section (10) which is designed in its basic form in the manner of a truncated cone, in the manner of a truncated pyramid or as a straight, horizontal prism having a respective bottom and top surface in the form of an equal-sided trapezium which has a shorter base line facing the vehicle floor (1).

4. Device according to one of Claims 1 to 3, **characterized in that** the expanding part (5) has a guide section (11) which, in particular, adjoins the expanding section (10) and is designed in its basic form as a cylinder or as a prism, in particular as a rectangular parallelepiped.

5. Device according to one of Claims 1 to 4, **characterized in that** the retaining members (2) are connected to the seat in such a manner that a lateral relative movement with respect to the seat is possible, but a perpendicular movement is not.

6. Device according to one of Claims 1 to 5, **characterized in that** the expanding part (5) is connected to the seat in such a manner that a perpendicular relative movement with respect to the seat is possible, but a lateral movement is not.

7. Device according to one of Claims 1 to 6, **characterized in that** an actuating device is provided for the movement of the expanding part (5) towards the vehicle floor (1) in the direction (A) and back.

8. Device according to one of Claims 1 to 7, **characterized by** an outline of the retaining members (2) essentially in the shape of an annular segment, and an essentially circular outline of the expanding part (5), the retaining members (2) engaging in a shell-like manner around the expanding part (5), which is of mandrel-like design.

9. Device according to one of Claims 1 to 8, **characterized by** three or four retaining members (2) and three or four securing elements (3).

## Revendications

1. Dispositif de fixation d'un siège de véhicule, destiné à la fixation démontable du siège de véhicule à un plancher de véhicule (1), comprenant au moins deux organes de retenue (2) solidaires du siège, destinés à coopérer avec des éléments de fixation (3) solidaires du plancher, qui sont en particulier fixes en position, les organes de retenue (2) entrant en liaison par sûreté de forme avec les éléments de fixation (3) dans un état d'enclenchement, un élément écarteur (5) qui s'amincit dans la direction (A) allant vers le plancher (1) du véhicule étant disposé entre les organes de retenue (2), et les organes de retenue (2) pouvant être amenés d'un état de dégagement non écarté, dans lequel ils peuvent être accouplés aux éléments de fixation (3) et séparés de ces derniers, à un état d'enclenchement écarté, sous l'effet du mouvement relatif de cet élément écarteur vers les organes de retenue (2), **caractérisé en ce que** les organes de retenue (2) présentent un segment de tête (6) qui s'amincit dans la direction (A) allant vers le plancher (1) du véhicule et à l'extrémité côté siège duquel, sur les côtés extérieurs des organes de retenue (2) qui se tournent le dos, se trouvent des rainures (7) qui, dans l'état d'enclenchement, établissent la liaison par sûreté de forme avec les éléments de fixation (3) par des surfaces de contact (8) qui regardent vers le siège, et les organes de retenue (2) présentent comme surfaces. de contact et de glissement pour l'élément écarteur (5), sur des côtés intérieurs qui se font face, des surfaces obliques (9) qui convergent l'une vers l'autre dans la direction (A) allant vers le plancher (1) du véhicule et qui sont adaptées au profil aminci de l'élément écarteur (5), de telle manière que les organes de retenue (2) décrivent un mouvement de translation linéaire latéral, dirigé sensiblement parallèlement au plancher (1) du véhicule, sous un effet de coin de l'élément écarteur (5).

2. Dispositif selon la revendication 1, **caractérisé en ce que** les éléments de fixation (3) fixes en position sont formés par les bords d'une ouverture (4) du plancher (1) du véhicule, derrière lesquels les organes de retenue (2) sont accrochés dans l'état d'enclenchement.

3. Dispositif selon une des revendications 1 ou 2, **caractérisé en ce que** l'élément écarteur (5) présente à sa pointe un segment écarteur (10) qui, dans sa configuration de base, est en forme de tronc de cône, en forme de tronc de pyramide, ou constitué par un prisme droit couché ayant une base inférieure et une base supérieure de la forme d'un trapèze isocèle, qui présentent une ligne de base plus courte dirigée vers le plancher (1) du véhicule.

4. Dispositif selon une des revendications 1 à 3, **caractérisé en ce que** l'élément écarteur (5) présente un segment de guidage (11) qui, en particulier, fait suite au segment écarteur (10) et qui est réalisé, dans sa configuration de base, sous la forme d'un cylindre ou d'un prisme, en particulier d'un parallélépipède.

5. Dispositif selon une des revendications 1 à 4, **caractérisé en ce que** les organes de retenue (2) sont assemblés au siège d'une manière qui permet un déplacement relatif latéral mais ne permet pas de déplacement relatif vertical par rapport au siège.

6. Dispositif selon une des revendications 1 à 5, **caractérisé en ce que** l'élément écarteur (5) est assemblé au siège d'une manière qui permet un déplacement relatif vertical mais ne permet pas de déplacement relatif latéral par rapport au siège.

7. Dispositif selon une des revendications 1 à 6, **caractérisé en ce qu'**un dispositif d'actionnement est prévu pour le déplacement de l'élément écarteur (5) dans la direction (A) allant vers le plancher (1) du véhicule en aller et retour.

8. Dispositif selon une des revendications 1 à 7, **caractérisé par** un contour de base des organes de retenue (2) sensiblement en forme de segment de couronne, et par un contour de base de l'élément écarteur (5) sensiblement circulaire, les organes de retenue (2) entourant à la façon d'une coque l'élément écarteur (5) réalisé en forme de mandrin.

9. Dispositif selon une des revendications 1 à 8, **caractérisé par** trois ou quatre organes de retenue (2) et trois ou quatre éléments de fixation (3).
